# EUROPÄISCHE PATENTSCHRIFT

(11) **EP 1 196 260 B1**
(45) Veröffentlichungstag und Bekanntmachung des Hinweises auf die Patenterteilung: **07.05.2003**
(21) Anmeldenummer: 00947807.4
(22) Anmeldetag: 20.06.2000
(51) Int. Cl.: B23B 5/00

(54) **VERFAHREN UND ZUSTELLEINRICHTUNG ZUR REALISIERUNG DER VORSCHUBBEWEGUNG MINDESTENS EINES UM EIN ROTATIONSSYMMETRISCHES BAUTEIL UMLAUFENDEN WERKZEUGSUPPORTS**
METHOD AND FEED DEVICE FOR EFFECTING THE ADVANCE MOVEMENT OF AT LEAST ONE TOOL SUPPORT THAT ROTATES AROUND A ROTATIONALLY SYMMETRICAL PART
PROCEDE ET DISPOSITIF D'AVANCE POUR EFFECTUER L'AVANCEMENT D'AU MOINS UN SUPPORT D'OUTIL TOURNANT AUTOUR D'UN ELEMENT A SYMETRIE DE ROTATION

(30) Priorität: 24.06.1999 DE 19929712
(43) Veröffentlichungstag der Anmeldung: 17.04.2002
(73) Patentinhaber: SIEMENS AKTIENGESELLSCHAFT, 80333 München (DE)
(72) Erfinder: LUMM, Michael, D-46240 Bottrup (DE); WAGENFELD, Alfred, D-27305 Süstedt (DE); SANDKUHL, Jürgen, D-28844 Weyhe (DE)
(86) Internationale Anmeldenummer: DE0001980
(87) Internationale Veröffentlichungsnummer: WO01000357

(56) Entgegenhaltungen:
- DE-C- 3 816 307
- US-A- 3 908 491
- US-A- 4 716 271
- PATENT ABSTRACTS OF JAPAN vol. 012, no. 171 (M-700), 21. Mai 1988 (1988-05-21) & JP 62 287907 A (COSMO KOKI KK), 14. Dezember 1987 (1987-12-14)
- PATENT ABSTRACTS OF JAPAN vol. 010, no. 229 (P-485), 8. August 1986 (1986-08-08) & JP 61 062858 A (HITACHI LTD;OTHERS: 01), 31. März 1986 (1986-03-31)

## Beschreibung

Die Erfindung betrifft ein Verfahren und eine Zustelleinrichtung zur Realisierung der Vorschubbewegung mindestens eines um ein rotationssymmetrisches Bauteil umlaufenden Werkzeugsupports, gemäß dem Oberbegriff der unabhängigen Ansprüche.

Die Bearbeitung von großen Maschinenwellen, z. B. Turbinen- und Generatorwellen, erfordert spezielle Drehmaschinen, für die große Maschinenhallen erforderlich sind. Für Arbeiten vor Ort, z. B. zur Bearbeitung der Lagersitze bei Reparaturen durch Drehen, Schleifen oder Polieren, wäre eine Bearbeitung mit nichtstationären Maschinen, die auf die stehende Welle aufgesetzt werden können, wünschenswert, so daß umfangreiche und teure Ausbau- und Transportarbeiten vermieden werden könnten. Auch mögliche Beeinträchtigungen der Welle durch den Transport zum Einsatzort selbst sowie bei den nachfolgenden Einbauarbeiten lassen oftmals Nacharbeiten an der Welle wünschenswert erscheinen.

Für Anwendungen an kleineren Wellen sind bereits Drehmaschinen bekannt, die auf eine Welle aufgesetzt werden und um die Welle umlaufen. Das Problem bei solchen Bearbeitungseinrichtungen ist die Erzeugung von Vorschubbewegungen für die Bearbeitungwerkzeuge in Längrichtung und quer zur Welle. Für die Erzeugung der Vorschubbewegungen müssen separate Antriebe verwendet werden, die sich mit der Drehmaschine mitdrehen. Abgesehen von der großen Masse, die auf diese Weise zu bewegen und abzustützen ist, was Schwingungen verursacht, die zu Bearbeitungsungenauigkeiten führen, hat eine solche Anordnung weitere Nachteile. Die Energie für diese Antriebe muß mit Schleifringen auf die rotierenden Antriebe übertragen werden. Die Bearbeitungsmaschine muß deshalb ungeteilt ausgeführt werden, da ansonsten auch die Schleifringe geteilt werden müßten, eine Stromübertragung über geteilte Schleifringe aber erhebliche technische Schwierigkeiten bereiten würde.

Es ist dagegen wünschenswert, eine Bearbeitungsmaschine zum Aufsetzen auf eine entsprechend große Welle teilbar auszuführen und für einen Bearbeitungsvorgang auf der Welle zusammenzusetzen, ohne indessen eine Stromübertragung über geteilte Schleifringe zu benötigen. Außerdem soll die rotierende Masse möglichst klein gehalten werden.

Mit der gattungsbildenden JP-A 62287907 ist bereits eine Zustelleinrichtung bekannt, bei der die Antriebe für die Vorschubbewegungen ebenfalls ortsfest angeordnet sind. Die Vorschubbewegungen erfolgen über die Relativbewegung eines weiteren, mit der jeweiligen Leitspindel zusammenwirkenden Übertragungstriebes zum Hauptübertragungstrieb. Diese Übertragungstriebe sind mit dem Hauptübertragungstrieb über je ein Planetengetriebe verbunden, deren Planetenräder von Supportmotoren zusätzlich angetrieben oder gebremst werden können und damit die Relativbewegung bewirken. Die Lösung hat den Nachteil, daß derartige Planetengetriebe sehr kostenaufwendig sind und daß insbesondere bei An- und Abfahrtrampen innere Kräfte auftreten, die zu ungewollten Relativbewegungen von Haupt- und Vorschubantrieb und damit zu ungewollten Verstellungen der Bearbeitungswerkzeuge führen.

Der Erfindung liegt die Aufgabe zugrunde, ein Verfahren zur Realisierung der Vorschubbewegung und eine Zustelleinrichtung für eine Bearbeitungsmaschine mit umlaufendem Werkzeugsupport anzugeben, die eine Bearbeitung (Drehen, Fräsen, Orbitalschleifen) in NC-Qualität erlauben.

Die Aufgabe wird erfindungsgemäß gelöst durch die Merkmale im kennzeichnenden Teil der Ansprüche 1 und 3 im Zusammenwirken mit den Merkmalen im Oberbegriff. Zweckmäßige Ausgestaltungen der Erfindung sind in den Unteransprüchen enthalten.

Die Vorschubbewegung für die Werkzeuge wird dadurch erzeugt, daß Übertragungstriebe vorgesehen sind, die die Leitspindeln der Werkzeugsupporte antreiben und die selber mit anderer Geschwindigkeit angetrieben werden als die Bearbeitungsmaschine, die in ganzen rotiert; wirksam ist dann
die Relativgeschwindigkeit zwischen beiden. Ist die Relativgeschwindigkeit Null, so erfolgt keinerlei Vorschubbewegung.

Als Übertragungstriebe zwischen den Antriebsmotoren und der Bearbeitungsmaschine sind bevorzugt mehrere große Zahnkränze vorgesehen, wobei einer zum Drehen der gesamten Bearbeitungsmaschine vorgesehen ist, der damit auch die Schnittgeschwindigkeit eines Werkzeugs bezüglich der Welle bestimmt, während der oder die anderen den Vorschubbewegungen der Werkzeuge dienen.

Wenn alle Zahnkränze gleich schnell umlaufen, findet an den Plan- und Längssupporten keine Bewegung statt. Nur wenn die Zahnkränze für die Supporte zur Längs- und Planbewegung schneller oder langsamer laufen als der die Bearbeitungsmaschine antreibende Zahnkranz, kommt es auf Grund der Relativbewegung zwischen den Zahnkränzen zu einer Drehung der Leitspindeln und damit zu einem Vorschub der Supporte gegenüber der Bearbeitungsmaschine. Es ist also erforderlich, die Supportmotore, die auf die einzelnen Zahnkränze wirken, schneller oder langsamer anzutreiben als den Zahnkranz für die Bearbeitungsmaschine, wenn eine Vorschubbewegung bewirkt werden soll.

Die Zahnkränze sind vorzugsweise mit der gleichen Anzahl von außenliegenden Zähnen versehen. Die die Zahnkränze antreibenden Ritzel müssen dann gleiche Durchmesser aufweisen. Die Zahnkränze für den Antrieb der Leitspindeln sind innen verzahnt und treiben die Leitspindeln der Supporte über Ritzel an, die in der umlaufenden Bearbeitungsmaschine drehbeweglich gelagert sind.

Zum Antreiben des Zahnkranzes der umlaufenden Bearbeitungsmaschine und der der Leitspindeln gibt es je einen Antriebsmotor. Um alle Zahnkränze in einer Betriebsphase, in der keine Vorschubbewegung erfolgen soll, synchron mit dem Hauptmotor zu anzutreiben, ist erfindungsgemäß eine mechanische Kopplung des Hauptmotors mit den Supportmotoren, z. B. über Zahnriemen, vorgesehen, über die die Gehäuse der Supportmotore von dem Hauptmotor mitgenommen werden, und zwar im hier beschriebenen Fall mit gleicher Drehzahl, wobei auch die Wellen der Supportmotore, die in dieser Betriebsphase nicht selber angetrieben werden, mit der gleichen Drehzahl mitgenommen werden und die Zahnkränze für die Leitspindelbewegung antreiben, so daß es zu keiner Relativbewegung dieser Zahnkränze mit dem Zahnkranz kommt, der die Drehbewegung der gesamten Bearbeitungsmaschine bewirkt. Um dabei die Wirkung innerer Kräfte in der Bearbeitungsmaschine auszuschließen, wird jeder Supportmotor in dieser Betriebsphase zweckmäßig angebremst.

Alle Antriebsmotore sind ortsfest angeordnet, z. B. direkt auf der stehenden Welle oder auf einem neben der Welle stehenden Block. Die von den Leitspindeln gesteuerten Werkzeuge drehen sich dabei mit der Bearbeitungsmaschine, ohne eine Relativbewegung senkrecht oder längs der Welle auszuführen, solange die Drehzahl der Motorwelle eines oder beider Supportmotore gegenüber der Drehzahl des antreibenden Hauptmotors nicht verändert wird. Erst wenn sich die eine oder andere Leitspindel infolge der zugeschalteten eigenen Antriebsbewegung eines der Supportmotore schneller oder langsamer als die Bearbeitungsmaschine um die zu bearneitende Welle dreht, kommt es zu einer Bewegung des oder der Werkzeuge relativ zu der Welle. Die Stromzufuhr zu den Supportmotoren, deren Gehäuse ortsfest sind, aber mit gleicher Drehzahl wie der Hauptmotor rotieren, geschieht über Schleifringe, wobei die über die Schleifringe zugeführte Spannung die Drehzahl des jeweiligen Supportmotors und damit die Vorschubgeschwindigkeit bestimmt.

Anstelle von Drehwerkzeugen können auch andere Werkzeuge zur Bearbeitung der Wellenoberfläche eingesetzt werden, wie z. B. Schleifscheiben, Fräser oder Poliereinrichtungen.

Vorstehend wurde vorausgesetzt, daß alle Zahnkränze und die diese antreibende Ritzel gleiche Durchmesser und Zähnezahlen und der Hauptmotor und die Gehäuse der Supportmotoren die gleiche Drehzahl haben. Dies ist sicher die praktikabelste Lösung. Es ist jedoch auch möglich, Zahnkränze mit unterschiedlichen Durchmessern zu verwenden, wenn die Ritzel ebenfalls unterschiedliche Durchmesser haben und/oder die Drehzahlen der Motoren nicht gleich sind. Wichtig ist nur, daß in dem Betriebszustand, in dem keine Vorschubbewegung erfolgen soll, alle Zahnkränze mit gleicher Umdrehungszahl angetrieben werden.

Die Lösung hat den Vorteil, daß die Bearbeitungsmaschine geteilt ausgeführt werden kann. Sämtliche Antriebsmotoren sind ortsfest anzuordnen, die Supportmotoren rotieren nicht mit der gesamten Maschine mit, sondern nur für sich selbst. Damit wird'auch die rotierende Masse klein gehalten. Die Stromübertragung zu den Supportmotoren ist über ungeteilte Schleifringe realisierbar. Es wird eine einfache und genaue Steuerung der Werkzeugsupporte ermöglicht, auch bei Anfahr- und Abfahrrampen sowie bei einer Kurvenbearbeitung des zu bearbeitenden Bauteils, d. h. Flächen, Durchmesser und Kurven können wie bei herkömmlichen Werkzeugmaschinen programmiert mittels NC-Technik bearbeitet werden.

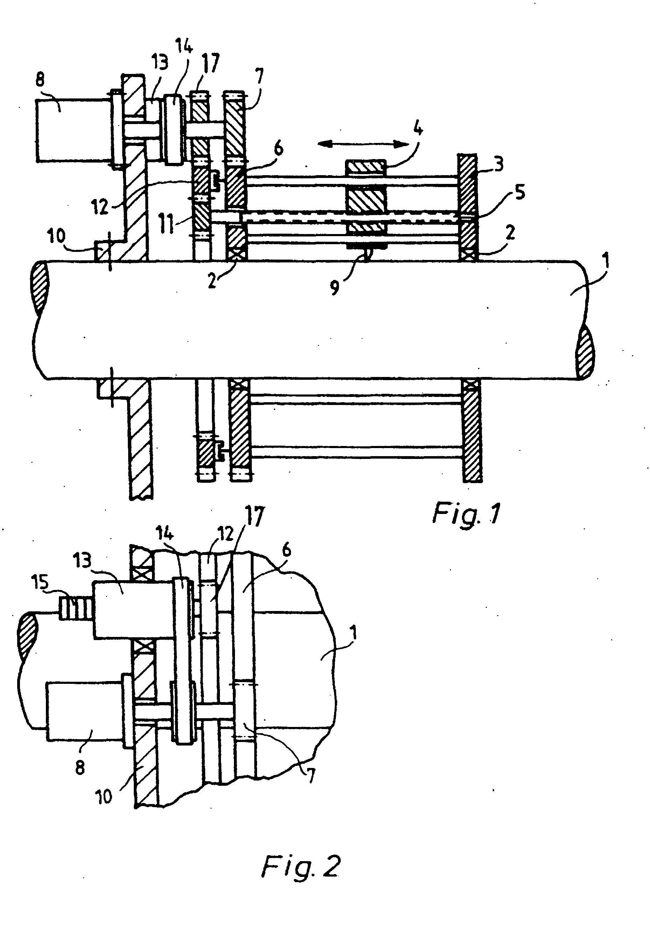

Die Erfindung soll nachstehend anhand eines ausführungsbeispiels näher erläutert werden. In den zugehörigen Zeichnungen zeigen
- Fig. 1: eine schematisch dargestellte Seitenansicht einer erfindungsgemäßen Bearbeitungsmaschine und
- Fig. 2: eine Draufsicht auf die Antriebsseite der Bearbeitungsmaschine gemäß Fig. 1.

Das Ausführungsbeispiel beschränkt sich aus Gründen der Anschaulichkeit auf eine Anordnung mit zwei Zahnkränzen, also einem für den Antrieb der Bearbeitungsmaschine als solcher und einem für den Antrieb einer Leitspindel für die Längsvorschubbewegung eines Supports. In der praktischen Ausführung wird mindestens ein dritter Zahnkranz für die Realisierung einer zweiten Vorschubbewegung des Werkzeugs vorgesehen sein.

Die Bearbeitungsmaschine wird auf eine zu bearbeitende Welle 1 aufgesetzt und stützt sich mit Lagern 2 auf dieser drehbeweglich ab. Sie besteht aus einer Rahmenabstützung 3, in der ein Werkzeugsupport 4 gelagert ist, der über eine Leitspindel 5 in Längsrichtung der Welle 1 eine Vorschubbewegung ausüben kann. Die Rahmenabstützung 3 ist auf der Antriebsseite als außenverzahnter Zahnkranz 6 ausgebildet. Über ein Ritzel 7 auf der Motorwelle eines Hauptmotors 8 wird der Zahnkranz 6 und damit auch der Werkzeugsupport 4 angetrieben, so daß dieser mit seinem Werkzeug 9, z. B. einem Drehstahl, um die Welle 1 herumläuft. Der Hauptmotor 8 ist dabei über eine Abstützung 10 auf der Welle 1 befestigt.

Die Leitspindel 5 ist in der Rahmenabstützung 3 über ein Ritzel 11 drehbar und bewegt den Werkzeugsupport 4 über einen Schneckenantrieb vor und zurück. Das Ritzel 11 wird selber von einem innen und außen verzahnten Zahnkranz 12 angetrieben, der drehbar an der Rahmenabstützung 3 gelagert ist. Solange die Zahnkränze 6 und 12 keine Relativbewegung zueinander ausführen, verharrt der Werkzeugsupport 4 in seiner Stellung, d. h., es wird kein Vorschub bewirkt. Das Ritzel 17 muß dazu; gleiche Zähnezahl von Ritzel 17 und Ritzel 7 sowie der Zahnkränze 6 und 12 vorausgesetzt, mit der gleichen Drehzahl angetrieben werden wie das Ritzel 7. Das geschieht dadurch, daß das Gehäuse eines Supportmotors 13, auf dessen Motorwelle das Ritzel 17 angeordnet ist, drehbar gelagert ist und mit der gleichen Drehzahl rotiert wie der Hauptmotor 8 bzw. das Ritzel 7, wobei es mit dieser Drehzahl das Ritzel 11 mitnimmt. Um die Rotation zu bewirken und dabei völlige Synchronität beider Antriebsbewegungen herzustellen, ist der Hauptmotor 8 mit dem Gehäuse des Supportmotors 13 mechanisch über einen Zahnriemen 14 gekoppelt.

Um in einer Betriebsphase ohne Vorschubbewegung keine von der Drehzahl des Gehäuses des Supportmotors 13 abweichende Drehzahl seines Ritzels 17 zuzulassen, wird der Supportmotor 13 zweckmäßig angebremst, so daß Gehäuse und Motorwelle des Supportmotors 13 gekoppelt sind. Dazu im Gegensatz wird für eine Vorschubbewegung des Werkzeugsupports 4 die Bremse gelöst und der Supportmotor 13 zusätzlich selbst angetrieben. Das geschieht über die Stromzuführung zu Schleifringen 15 am Supportmotor 13. Mit der Inbetriebnahme des Supportmotors 13 wird das Ritzel 17 und damit der Zahnkranz 12 über die Drehung, die durch das Gehäuse des Supportmotors 13 vermittelt wird, hinaus in der einen Richtung zusätzlich angetrieben oder in der anderen Richtung abgebremst. Auf diese Weise kommt eine Relativbewegung der Zahnkränze 6 und 12 zueinander zustande, die eine Drehung der Leitspindel 5 und damit einen Vorschub des Werkzeugsupports 4 bewirken.

Da der Supportmotor 13 mit seinem Schleifringsatz ortsfest angeordnet ist, kann die Rahmenabstützung 3 geteilt ausgeführt sein, so daß sie sich an jeder Stelle der Welle 1 auf diese aufsetzen läßt.

Eine weitere Vorschubbewegung radial zur Welle 1 läßt sich, wie leicht einzusehen ist, mit einem zweiten Supportmotor und einem dritten Zahnkranz sowie einem üblichen Umlenkgetriebe am Werkzeugsupport erreichen. Sind noch weitere Supportantriebe nötig, so können diese in der gleichen Weise realisiert werden.

### Bezugszeichenliste

- 1: Welle
- 2: Lager
- 3: Rahmenabstützung
- 4: Werkzeugsupport
- 5: Leitspindel
- 6: Zahnkranz
- 7: Ritzel
- 8: Hauptmotor
- 9: Werkzeug
- 10: Abstützung
- 11: Ritzel
- 12: Zahnkranz
- 13: Supportmotor
- 14: Zahnriemen
- 15: Schleifringe

- 17: Ritzel

## Patentansprüche

1. Verfahren zur Realisierung der Vorschubbewegung mindestens eines um ein rotationssymmetrisches Bauteil umlaufenden Werkzeugsupports (4), der/die über jeweils eine Leitspindel (5) zustellbar, an dem Bauteil abgestützt und als ganzes von einem stationär gelagerten Hauptmotor (8) über einen fest mit der Abstützung des oder der Werkzeugsupporte verbundenen Hauptübertragungstrieb rotierend angetrieben wird/werden, wobei die Vorschubbewegung jeder Leitspindel (5) jeweils durch die Relativbewegung eines weiteren, motorisch angetriebenen, mit der Leitspindel zusammenwirkenden Übertragungstriebes (12) zu dem Hauptübertragungstrieb bewirkt wird und die Relativbewegung durch den Antrieb jeweils eines den weiteren Übertragungstrieb antreibenden, ortsfest gelagerten Supportmotors (13) erzeugt wird,
**dadurch gekennzeichnet,**
**dass** der Supportmotor (13) als ganzes mit Hilfe einer mechanischen Kopplung mit dem Hauptmotor (8) von diesem synchron rotierend angetrieben wird.

2. Verfahren nach Anspruch 1,
**dadurch gekennzeichnet,**
**dass** jeder Supportmotor bei einer Zustellung von Null angebremst wird.

3. Zustelleinrichtung für eine Bearbeitungsmaschine zur Oberflächenbearbeitung von rotationssymmetrischen Bauteilen (1) mit einem stationär gelagerten Hauptmotor (8) und einem Hauptübertragungstrieb zur Übertragung der Antriebsbewegung vom Hauptmotor (8) zu mindestens einem um das Bauteil (1) umlaufenden, an mindestens einer Leitspindel (5) zustellbaren Werkzeugsupport (4), der sich mit einer Supporthalterung (3) an dem Bauteil (1) abstützt, wobei jede Leitspindel (5) von einem weiteren Übertragungstrieb und dieser von einem ortsfesten Supportmotor (13) antreibbar ist,
**dadurch gekennzeichnet,**
**dass** das Gehäuse des Supportmotors (13) drehbar gelagert und mechanisch mit dem Hauptmotor (8) gekoppelt und so von diesem synchron rotierend antreibbar ist.

4. Zusteileinrichtung nach Anspruch 3,
**dadurch gekennzeichnet,**
**dass** der Hauptübertragungstrieb ein von einem auf der Motorwelle des Hauptmotors (8) sitzenden Kitzel (7) angetriebener, außenverzahnter Zahnkranz (6) ist.

5. Zustelleinrichtung nach Anspruch 3 oder 4,
**dadurch gekennzeichnet,**
**dass** der Hauptübertragungstrieb ein von der Motorwelle des Hauptmotors über einen Zahnriemen angetriebener, außenverzahnter Zahnkranz ist..

6. Zustelleinrichtung nach einem der Ansprüche 3 bis 5,
**dadurch gekennzeichnet,**
**dass** der weitere Übertragungstrieb ein von einem auf der Motorwelle des Supportmotors (13) sitzenden Ritzel (11) angetriebener, außen- und innenverzahnter Zahnkranz (12) ist.

7. Zustelleinrichtung nach einem der Ansprüche 3 bis 6,
**dadurch gekennzeichnet,**
**dass** der weitere Übertragungstrieb ein von der Motorwelle des Supportmotors über einen Zahnriemen angetriebener, außen- und innenverzahnter Zahnkranz ist.

8. Zustelleinrichtung nach einem der Ansprüche 3 bis 7,
**dadurch gekennzeichnet,**
**dass** jeder Supportmotor (13) zur Stromübertragung auf seine Wicklungen mit einem Schleifringsatz (15) ausgerüstet ist.

9. Zustelleinrichtung nach einem der Ansprüche 3 bis 8,
**dadurch gekennzeichnet,**
**dass** der weitere Übertragungstrieb an einer Abstützung (10) des Hauptmotors (8) drehbar gelagert ist.

10. Zustelleinrichtung nach einem der Ansprüche 3 bis 8,
**dadurch gekennzeichnet,**
**dass** der weitere Übertragungstrieb an der Supporthalterung (3) des Werkzeugsupports (4) drehbar gelagert ist.

11. Zustelleinrichtung nach einem der Ansprüche 3 bis 10,
**dadurch gekennzeichnet,**
**dass** der Hauptmotor (8) mit dem Gehäuse des oder der Supportmotoren (13) über Zahnriemen (14) mechanisch gekoppelt ist.

12. Zustelleinrichtung nach einem der Ansprüche 3 bis 10,
**dadurch gekennzeichnet,**
**dass** der Hauptmotor mit dem Gehäuse des oder der Supportmotoren über Zahnradgetriebe mechanisch gekoppelt ist.

13. Zustelleinrichtung nach einem der Ansprüche 3 bis 12,
**dadurch gekennzeichnet,**
**dass** der Supportmotor (13) ein Bremsmotor ist.

## Claims

1. Method for carrying out the advancing movement of at least one tool rest (4) rotating about a rotationally symmetric component and which is capable of being fed in each case via a leadscrew (5), is supported on the component and is driven in rotation as a whole by a stationarily mounted main motor (8) via a main transmission mechanism connected firmly to the support of the tool rest or tool rests, the advancing movement of each leadscrew (5) being brought about in each case by the relative movement of a further motor-driven transmission mechanism (12) cooperating with the leadscrew, in addition to the main transmission mechanism, and the relative movement generated by the drive in each case of a rest motor (13) mounted at a fixed location and driving the further transmission mechanism, **characterized in that** the rest motor (13) is synchronously driven in rotation as a whole by the main motor (8) with the aid of a mechanical coupling to the latter.

2. Method according to Claim 1, **characterized in that** each rest motor is braked in the event of a feed of zero.

3. Feed device for a working machine for the surface machining of rotationally symmetric components (1), with a stationarily mounted main motor (8) and with a main transmission mechanism for transmitting the drive movement from the main motor (8) to at least one tool rest (4) which rotates about the component (1) and is capable of being fed on at least one leadscrew (5), and which is supported by means of a rest mounting (3) on the component (1), each leadscrew (5) being capable of being driven by a further transmission mechanism and the latter by a fixed rest motor (13), **characterized in that** the housing of the rest motor (13) is mounted rotatably and is coupled mechanically to the main motor (8) and is thus capable of being driven synchronously in rotation by the latter.

4. Feed device according to Claim 3, **characterized in that** the main transmission mechanism is an externally toothed gear ring (6) driven by a pinion (7) seated on the motor shaft of the main motor (8).

5. Feed device according to Claim 3 or 4, **characterized in that** the main transmission mechanism is an externally toothed gear ring driven by the motor shaft of the main motor via a toothed belt.

6. Feed device according to one of Claims 3 to 5, **characterized in that** the further transmission mechanism is an externally and internally toothed gear ring (12) driven by a pinion (11) seated on the motor shaft of the rest motor (13).

7. Feed device according to one of Claims 3 to 6, **characterized in that** the further transmission mechanism is an externally and internally toothed gear ring driven by the motor shaft of the rest motor via a toothed belt.

8. Feed device according to one of Claims 3 to 7, **characterized in that** each rest motor (13) is equipped with a slip ring set (15) for the transmission of power to its windings.

9. Feed device according to one of Claims 3 to 8, **characterized in that** the further transmission mechanism is mounted rotatably on a support (10) of the main motor (8).

10. Feed device according to one of Claims 3 to 8, **characterized in that** the further transmission mechanism is mounted rotatably on the rest mounting (3) of the tool rest (4).

11. Feed device according to one of Claims 3 to 10, **characterized in that** the main motor (8) is coupled mechanically to the housing of the rest motor or rest motors (13) via toothed belts (14).

12. Feed device according to one of Claims 3 to 10, **characterized in that** the main motor is coupled mechanically to the housing of the rest motor or rest motors via gearwheel mechanisms.

13. Feed device according to one of Claims 3 to 12, **characterized in that** the rest motor (13) is a brake motor.

## Revendications

1. Procédé de réalisation du mouvement d'avance d'au moins un support (4) d'outil tournant autour d'un élément de révolution qui, en pouvant être approché respectivement par une broche (5) de guidage, s'appuie (s'appuient) sur l'élément et est (sont) entraîné(s) en rotation par un moteur (8) principal monté fixe par l'intermédiaire d'une transmission principale reliée rigidement à l'appui du support d'outil ou des supports d'outils, le mouvement d'avance de chaque broche (5) de guidage étant provoqué respectivement par le mouvement relatif par rapport à la transmission principale d'une autre transmission (12) entraînée par un moteur et coopérant avec la broche de guidage, et le mouvement relatif étant produit par l'entraînement de respectivement un moteur (13) support monté fixe et entraînant l'autre transmission,
**caractérisé**
**en ce que** le moteur (13) support est entraîné en rotation en son entier à l'aide d'un accouplement mécanique avec le moteur (8) principal en synchronisme avec celui-ci.

2. Procédé suivant la revendication 1,
**caractérisé en ce que** chaque moteur support est freiné pour une approche de zéro.

3. Dispositif d'approche pour une machine d'usinage destinée à usiner en surface des éléments (1) de révolution comprenant un moteur (8) principal monté fixe et une transmission principale de transmission du mouvement d'entraînement du moteur (8) principal à au moins un support d'outil (4) qui tourne autour de l'élément (1) qui peut être approché sur au moins une broche (5) de guidage et qui s'appuie par une fixation (3) de support sur l'élément (1), chaque broche (5) de guidage pouvant être entraînée par une autre transmission et celle-ci par un moteur (13) support fixe,
**caractérisé**
**en ce que** le carter du moteur (13) support est monté tournant et est couplé mécaniquement au moteur (8) principal et peut ainsi être entraîné en rotation en synchronisme par celui-ci.

4. Dispositif d'approche suivant la revendication 3,
**caractérisé en ce que** la transmission principale est une couronne (6) dentée extérieurement entraînée par un pignon (7) calé sur l'arbre du moteur (8) principal.

5. Dispositif d'approche suivant la revendication 3 ou 4,
**caractérisé en ce que** la transmission principale est une couronne dentée extérieurement entraînée par l'intermédiaire d'une courroie dentée par l'arbre du moteur principal.

6. Dispositif d'approche suivant l'une des revendications 3 à 5,
**caractérisé en ce que** l'autre transmission est une couronne (12) dentée extérieurement et intérieurement, entraînée par un pignon (11) calé sur l'arbre du moteur (13) support.

7. Dispositif d'approche suivant l'une des revendications 3 à 6,
**caractérisé en ce que** l'autre transmission est une couronne dentée extérieurement et intérieurement, entraînée par l'intermédiaire d'une courroie dentée par l'arbre du moteur support.

8. Dispositif d'approche suivant l'une des revendications 3 à 7,
**caractérisé en ce que** chaque moteur (13) support est équipé pour la transmission du courant électrique à ses enroulements d'un jeu (15) de bagues collectrices.

9. Dispositif d'approche suivant l'une des revendications 3 à 8,
**caractérisé en ce que** l'autre transmission est montée tournante sur un appui (10) du moteur (8) principal.

10. Dispositif d'approche suivant l'une des revendications 3 à 8,
**caractérisé en ce que** l'autre transmission est montée tournante sur la fixation (3) du support d'outil (4).

11. Dispositif d'approche suivant l'une des revendications 3 à 10,
**caractérisé en ce que** le moteur (8) principal est couplé mécaniquement au carter du ou des moteur(s) (13) support(s) par l'intermédiaire de courroies (14) dentées.

12. Dispositif d'approche suivant l'une des revendications 3 à 10,
**caractérisé en ce que** le moteur principal est couplé mécaniquement au carter du ou des moteur(s) support(s) par des engrenages.

13. Dispositif d'approche suivant l'une des revendications 3 à 12,
**caractérisé en ce que** le moteur (13) support est un moteur frein.
